# EUROPEAN PATENT SPECIFICATION

(11) **EP 2 568 944 B1**
(45) Date of publication and mention of the grant of the patent: **07.09.2016**
(21) Application number: 11780258.7
(22) Date of filing: 10.03.2011
(51) Int. Cl.: A61G 5/14, B60N 2/02, B60N 2/18, B60N 2/24, B60N 2/46

(54) **SEAT ASSEMBLY**
SITZANORDNUNG
ENSEMBLE SIÈGE

(30) Priority: 14.05.2010 FI 20105532
(43) Date of publication of application: 20.03.2013
(73) Proprietor: TamErgo Oy, 33540 Tampere (FI)
(72) Inventor: EEROLA, Jorma, 33710 Tampere (FI); HÄRKÖNEN, Teemu, 33400 Tampere (FI); KIVEKÄS, Mikko, 00330 Helsinki (FI); KYTÖVIITA, Ismo, 33420 Tampere (FI); PALO-OJA, Petri, 33680 Tampere (FI)
(74) Representative: Suominen, Kaisa Liisa
(86) International application number: PCT/FI2011/050210
(87) International publication number: WO 2011/141617

(56) References cited:
- DE-A1- 4 417 616
- FR-A1- 2 663 218
- GB-A- 2 449 248
- JP-A- 2002 345 897
- US-A- 4 569 556
- US-A- 4 632 455
- US-A- 4 809 804
- US-A- 4 809 804
- US-A1- 2006 284 462
- US-A1- 2009 188 028

## Description

The invention relates to a seat assembly according to the preamble of the independent claim directed thereto.

The purpose of the seat assembly is particularly to further standing up of a person sitting on a sitting base in an assisted manner so that the person him-/herself could be able to stand up without an assistant.

Today there is on the market e.g. a shower wheelchair developed for the above purpose, in which the elbow rests are arranged to incline together with the seat surface into a downward tilting position by its front edge. To assist the tilting movement in the solution in question and in order to diminish use of power required of the person sitting on the seat surface, the seat surface is coupled in a spring effected manner with the support structures of the chair. The showerchair in question is thus in its standby-position inclined downward by its seat surface, in which case the person standing in front of the wheelchair with his back facing the wheelchair first of all starts to lean on the seat surface and thereafter, when getting lower while sitting down, presses the seat surface into a horizontal position by influence of his/her weight. When the person stands up from the chair, the spring force assists the person to stand up from the seat surface.

The solution in question is in practice a step in the right direction, but it is not, however, easy enough to use in practice, so that e.g. a person having limited capability for moving or an aged person could manage totally by him-/herself to deal with his/her activities only with the help of it. Furthermore a disadvantage involved with a spring powered implementation is the fact that it requires adjustment of the spring force according to the weight of a person at any given time, so that a too high spring force will make it difficult for a person to sit down or on the other hand that the influence of the spring power will remain inadequate due to high weight of a person. Generally taken, a big problem in the implementation of the type in question is furthermore the fact that from the point of view of the person using the chair in question, the chair offers only passive assistance, so that use of power of the person him-/herself can not be activated.

On the other hand, from patent publication FI 850635, a developed armchair is further known, which comprises a seat part with elbow rests, whereby in connection with the seat part are arranged tilting means in order to incline the seat part from an essentially horizontal sitting -position to a standing up -position, where the seat part is inclined downward toward its front edge, and lifting means in order to move the seat part upward while being inclined to the standing up -position from the sitting -position, the tilting means and lifting means operating simultaneously through a joint mechanism. In order to enable assisting of a standing up -movement by influence of the person him-/herself sitting on the seat part, by exploting his/her upper body through using hand force, the joint mechanism is arranged operable at least partly through the elbow rests, such as by a power influence directed downward from the elbow rests essentially in front of a turning joint for a tilting and lifting movement.

The solution mentioned above is based on a very complicated and multipartite joint mechanism, being carried out on scissors-principle, whereby one articulation point is movable with respect to the frame of the chair due to the scissors-principle. The solution in question is thus expensive to carry out due to the multitude of articulated arms and articulation points of the articulation mechanism belonging there to. The type of solution in question is not very strongly built in practice particularly when keeping in mind its purpose, nor adequately reliable in use, either. The solution in question has furthermore such a bad problem that the elbow rests move too much down in the tilting movement i.e. clearly below the seat part, which is why a person standing up can not e.g. exploit his/her hand force till the end of the movement due to the elbow rests sinking from under.

Furthermore in patent GB 2449248 is presented an articulated chair that is aimed at furthering standing up of a person sitting on the chair in an assisted manner, whereby the chair comprises a joint mechanism that is arranged on quadrangle joint principle in a way that it consists of one or more pairs of articulated arms, the arms being articulated in connection with the frame of the chair and turning in an essentially vertical plane. In the joint mechanism a frontal articulated arm is shorter than a second articulated arm in order to bring about a simultaneously tilting and lifting movement of the seat part of the chair in question.

The articulated chair according to GB 2449248 provides only a motorized solution, which as such is not able to assist e.g. an elderly person particularly suffering from Alzheimer's disease adequately without a need for an assisting person to give further support for the person rising from the chair. This kind of a chair does not able the person sitting on the chair to exploit his/her upper body by utilizing hand forces in order to actually transmit power for the tilting and lifting movement of the seat part of the chair. This is why, the solution according to GB 2449248 does not enable functioning of the chair as a muscular exertion device, either.

It is an aim of the seat assembly according to the present invention to achieve a decisive improvement in the problems described above and thus to raise essentially the level of prior art. In order to carry out this aim, the seat assembly according to the invention is mainly characterized by what has been defined in the characterizing part of the independent claim directed thereo.

As the most important advantages of the seat assembly according to the invention may be mentioned the simplicity and efficiency of its structures and functioning, so that use of power of the person him-/herself using the seat assembly can be activated. When a person starts to get up from the seat assembly, he/she first of all leans her/his upper body forward in a natural way, in which case his/her centre of gravity moves forward, whereafter by pushing the elbow rests downward with his/her hands, he/she achieves an efficient "pushing force" from the seat part, when the same turns, by influence of a momentum effect of the force directed from the elbow rests during the whole length of the standing up -motion. Thanks to the above, the seat assembly according to the invention can also be used in addition to its basic function even as a so called muscular exertion device particularly for practicing of hand or leg power. In the use of the seat assembly according to the invention, also power required for standing up is diminished thanks to the change in angles of the ankles, knees and hips, wherein by virtue of moving of the centre of gravity forward of the person, also the angle of the lower extremities gets as profitable as possible with a point of view of the power production of the big thigh muscles.

In the seat assembly according to the invention first of all extra articulated arms and articulation points can be avoided thanks to the quadrangle joint -principle of the joint mechanism, which results to a very firm and use durable structure particularly thanks to those from all over fixed articulation points. In this way, it is on the other hand made possible that, when a person stands up e.g. from a relatively low sitting base, the seat assembly lifts the person adequately upward in a way that angles between thighs, legs and hips get more profitable (bigger), which furthers significantly standing up particularly of a person in a poor condition, especially thanks to the elbow rests remaining continuously high enough above the seat part.

Other advantageous embodiments of the seat assembly according to the invention have been presented in the dependent claims directed thereto.

In the following description the invention is illustrated in detail with reference to the appended drawings, in which
- In figure 1: is shown as a side view an advantageous operating principle of a seat assembly according to the invention, wherein a quadrangle joint mechanism resulting both a tilting and a lifting operation is exploited,
- In figure 2: is shown as a side view a seat assembly applicable as an accessory for retrofitting,
- In figure 3: are shown as side and front views an advantageous embodiment of the seat assembly exploited in connection with a WC-seat,
- In figure 4: is shown furthermore as a sideview an alternative embodiment of the seat assembly according to the invention,
- In figure 5: is shown furthermore as a sideview an alternative implementation, not according to the invention, to the type of embodiment shown particularly in figure 1,
- In figure 6: is shown as a sideview a chair equipped with a seat assembly according to the invention in a partly inclined position,
- In figure 7: is shown as a perspective view an advantageous subassembly of the seat assembly according to the invention operating by auxiliary power, and
- In figures 8a - 8c: is shown an advantageous operating principle of the subassembly shown in figure 7 in different phases.

The invention relates to a seat assembly, which is intended particularly for assisting a person sitting thereon to stand up from a sitting position and, which comprises a seat part 1 provided in connection with a sitting base A and equipped with elbow rests 1a. In connection with the seat part 1 are arranged tilting means 2 in order to incline the seat part 1 from an essentially horizontal sitting -position I to a standing up -position II, where the seat part is inclined downward toward its front edge, and lifting means 4 in order to move the seat part 1 upward while being inclined to the standing up -position II from the sitting - position I, the tilting means and lifting means operating simultaneously through a joint mechanism. Particularly in order to enable assisting a standing up -movement by influence of the person him-/herself sitting on the seat part 1, by exploiting his/her upper body through using hand force, the joint mechanism 2, 4 is arranged operable at least partly through the elbow rests 1a, such as by a power influence F directed downward from the elbow rests 1a essentially in front of a turning joint N' for a tilting and lifting movement w'. The joint mechanism 2,4 is arranged on a quadrangle joint -principle in a way that it consists of one or more pairs of articulated arms Np, the arms being articulated in the connection with the seat part 1 and turning w" in an essentially vertical plane, whereby a frontal articulated arm Np1 is shorter than a second articulated arm Np2 in order to bring about the simultaneous tilting and lifting movement of the seat part 1.

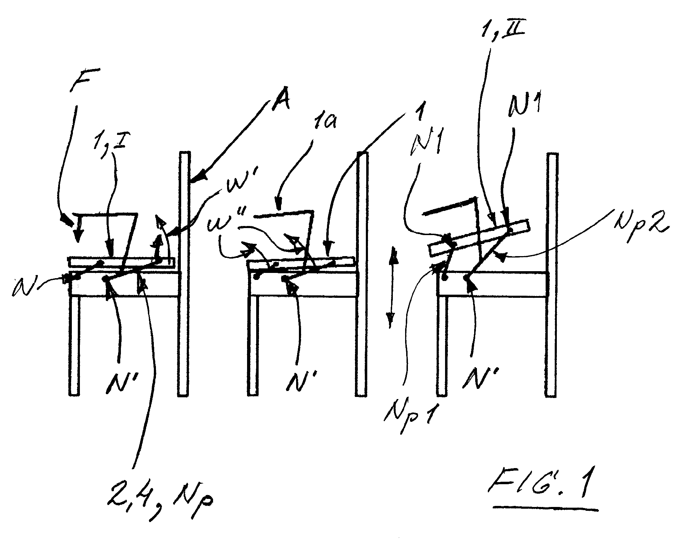

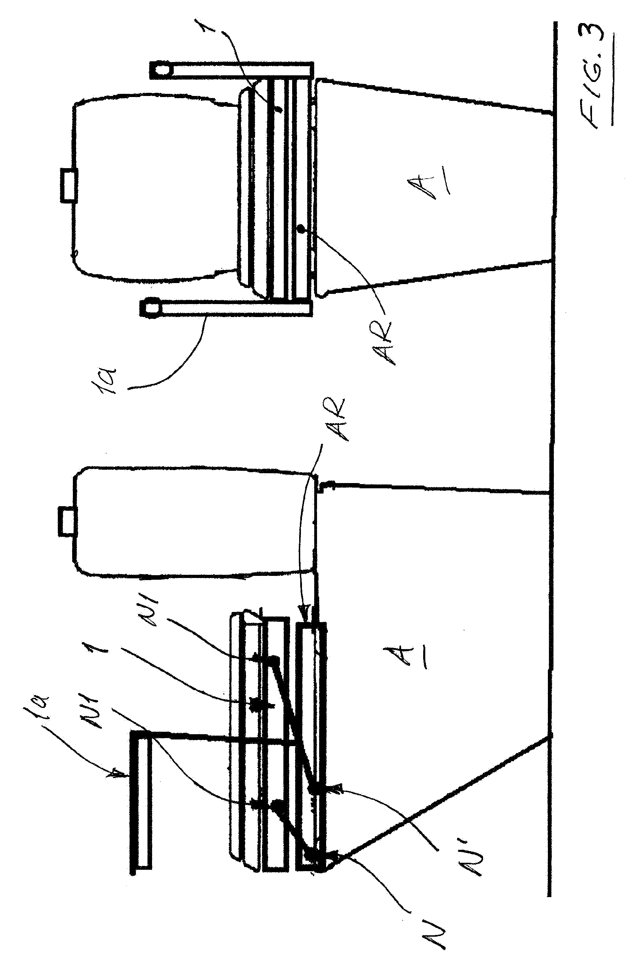

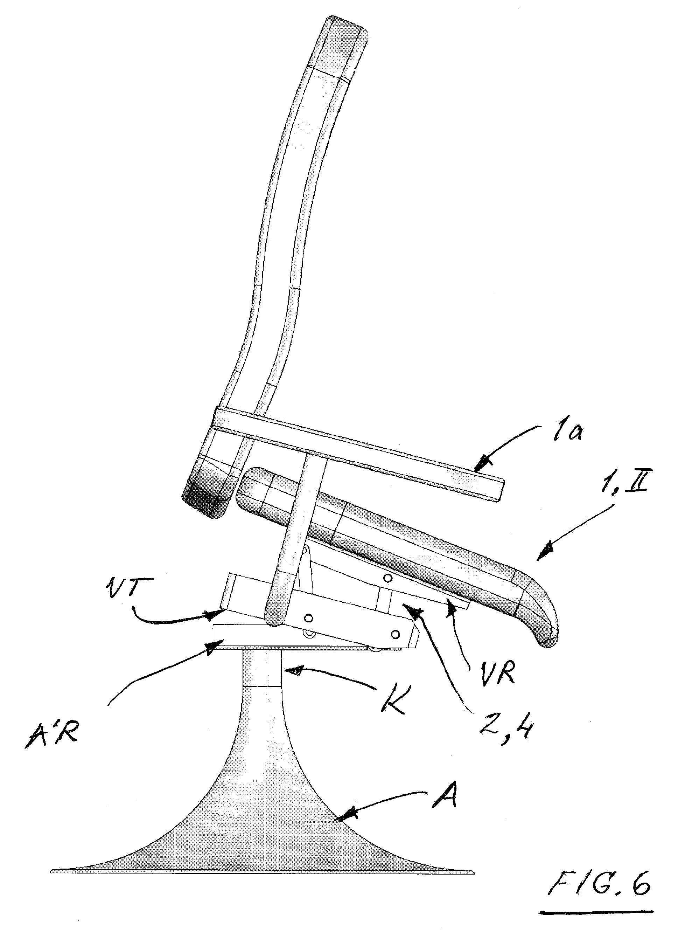

As shown e.g. in figures 1-3 and 6,the elbow rests 1a are arranged in a power transmitting connection with the second articulated arms Np2 of the quadrangle joint mechanism 2, 4. On this principle, thanks to the elbow rests 1a having so to say projection-like structures or in other words the elbow rests 1a being fastened only by their rear parts, the elbow rests further a person standing up from the sitting base also by yielding appropriately by the weight of the hand power. In the embodiments, shown in figures 1-3, the elbow rests are connected stationarily to the second articulated arms Np2, when instead in the embodiment shown figure 6, there has been used an intermediate bar VT, which turns vertically between the parts in question.

Thus, when a person stands up from a sitting base equipped with the seat assembly, he/she leans his/her upper body forward in a natural way, in which case his/her centre of gravity also moves forward. After this he/she achieves an efficient force momentum by the force F produced by pushing downward the elbow rests 1a, by influence of which the seat part 1 of the seat assembly while raising up and turning w' vertically, "pries" him/her up from the sitting base.

As an advantageous embodiment of the seat assembly according to the invention, it comprises, particularly when being used in connection with a chair as shown in figure 6, an intermediate frame VR arranged below the seat part 1, in connection with which at least one or several parallel pairs of articulated arms Np of the quadrangle joint mechanism 2, 4 is/are articulated N1 centrically in respect with the seat part 1.

In the advantageous embodiments, shown particularly in figures 1-4, the joint mechanism 2,4 is arranged on the quadrangle joint -principle so that it consists of at least two pairs of articulated arms Np, turning w" in an essentially vertical plane in the same direction and being coupled with the seat part 1 by joints N', N1 existing, when viewed from above the seat part 1, essentially on opposite sides with respects to the center line of the seat part. By virtue of the frontal articulated arms Np1 of both pairs of the articulated arms Np being shorter than the second articulated arms Np2, the position of the seat part 1 changes from the essentially horizontal position I into the standing up -position II, where the seat part is inclined downward toward its front edge by turning w" the frontal and the rear arms Np1, Np2 substantially with an equivalent turning angle.

In this connection, it is naturally possible to carry out the quadrangle joint mechanism instead of two in crosswise direction parallel pairs of articulated arms also e.g. by two successive articulated arms having plate-like structures and being wide enough in the crosswise direction (this kind of a solution has not been presented in the drawings).

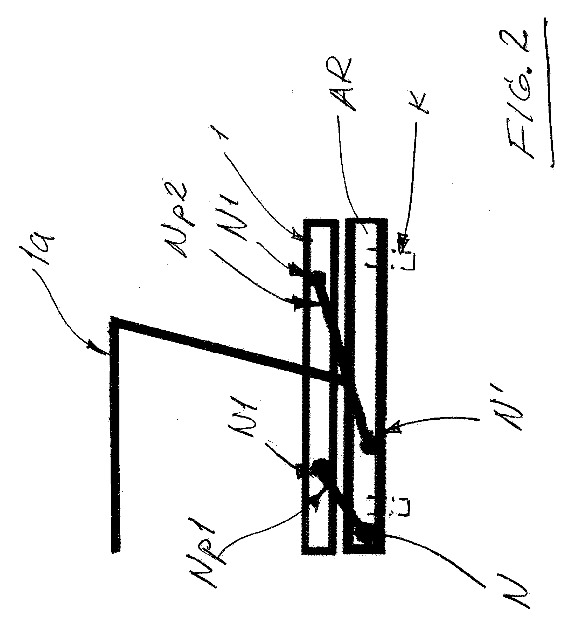

Furthermore as an advantageous embodiment of the seat assembly according to the invention, particularly with reference to figures 2 and 6, it comprises a frame part AR in order to enable use of the seat assembly as a separate accessory by fastening the same by fastening means 3 immovably in connection with a sitting base A.

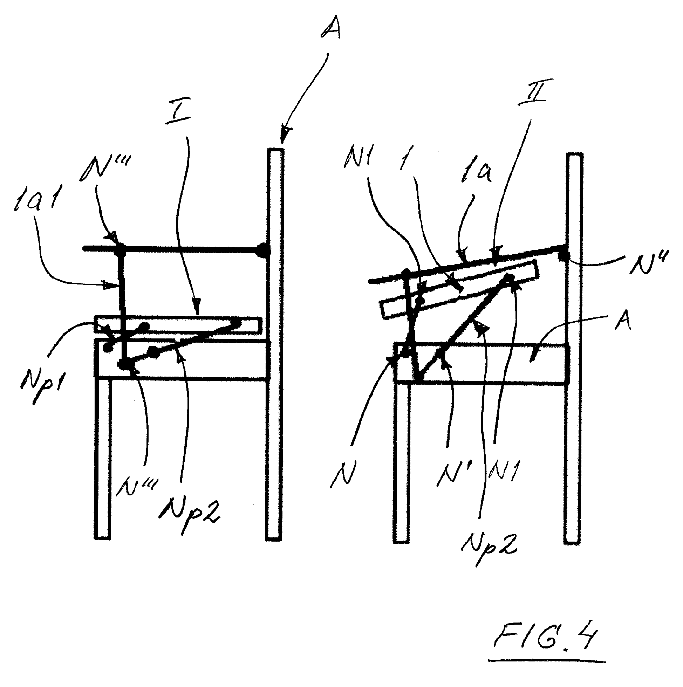

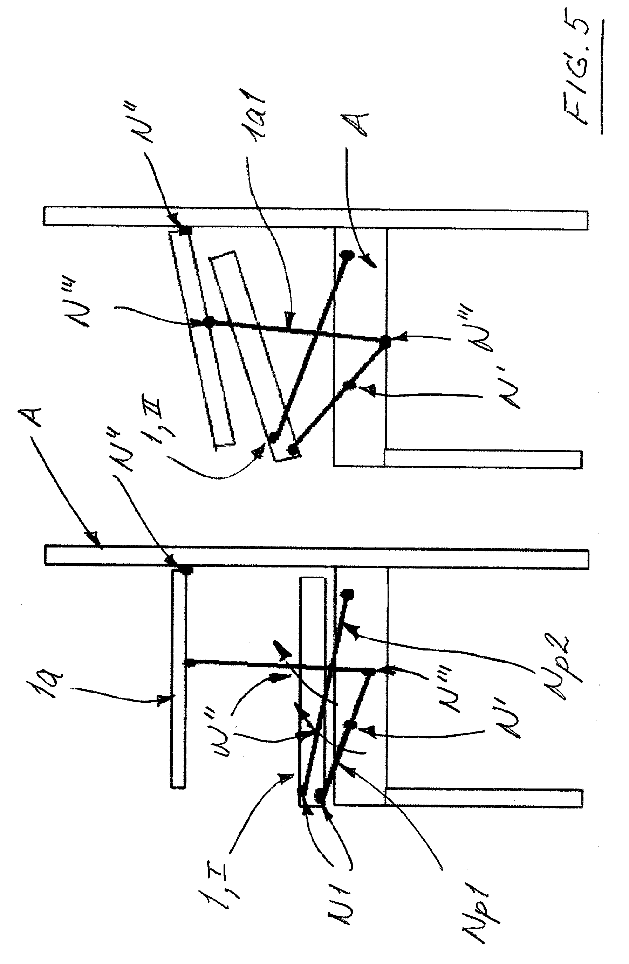

In the alternative embodiment shown in figure 4, the elbow rests 1a are coupled by rear parts thereof first of all in a turnable manner with the back of a chair A by a joint N" and on the other hand in a turnable manner by its front edge with a support arm 1a1 by joint N"', which support arm is furthermore coupled in a turnable manner by its lower edge by joint N"' with an extension of the second articulation arm Np2. With a solution articulated in this way, the momentum effect to the second articulation arm Np2 by the force directed downward from the elbow rest is made furthermore more efficient also thanks to being directed from the elbow rest by the support arm 1a1 in front of the turning joint N" of the seat part 1. Otherwise the solution in question corresponds to the articulation mechanism implementation according to figures 1, 2 and 3. Furthermore in the alternative implementation shown in figure 5, the implementation according to figure 4 is turned so to say upside down regarding the articulation, so that the articulation arms Np1 and Np2 therein move clockwise w" deviating thus from the previously presented embodiments. In this solution, both of the articulation arms Np1, Np2 are coupled essentially with the front edge of the seat part by joints N1.

Furthermore as an advantageous embodiment of the seat assembly according to the invention, it is arranged in an essentially built-in manner in connection with a sitting base A, such as a car seat, a chair, a wheelchair, a sitting platform, a shower chair, a WC-seat and/or alike.

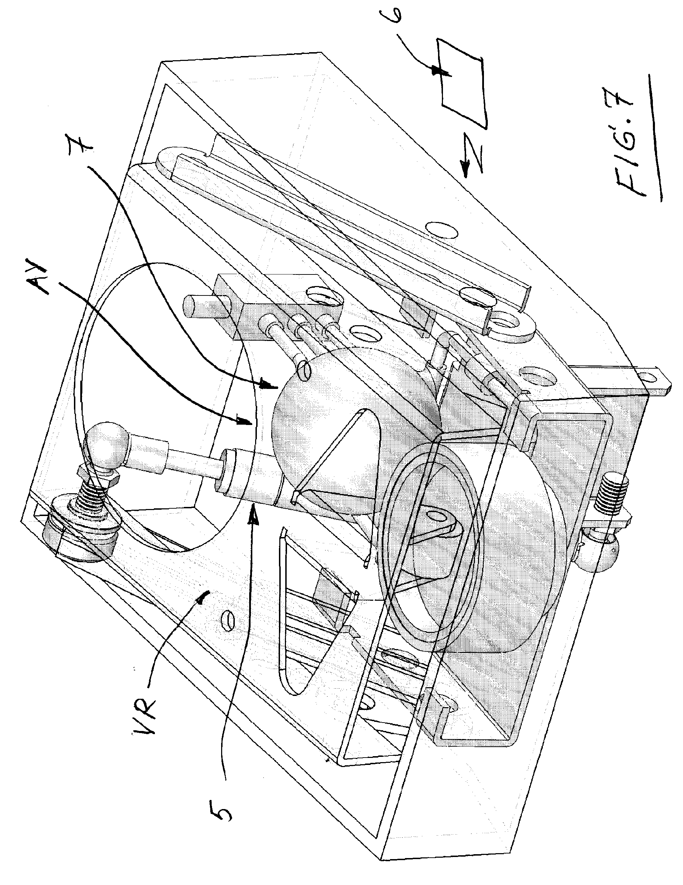

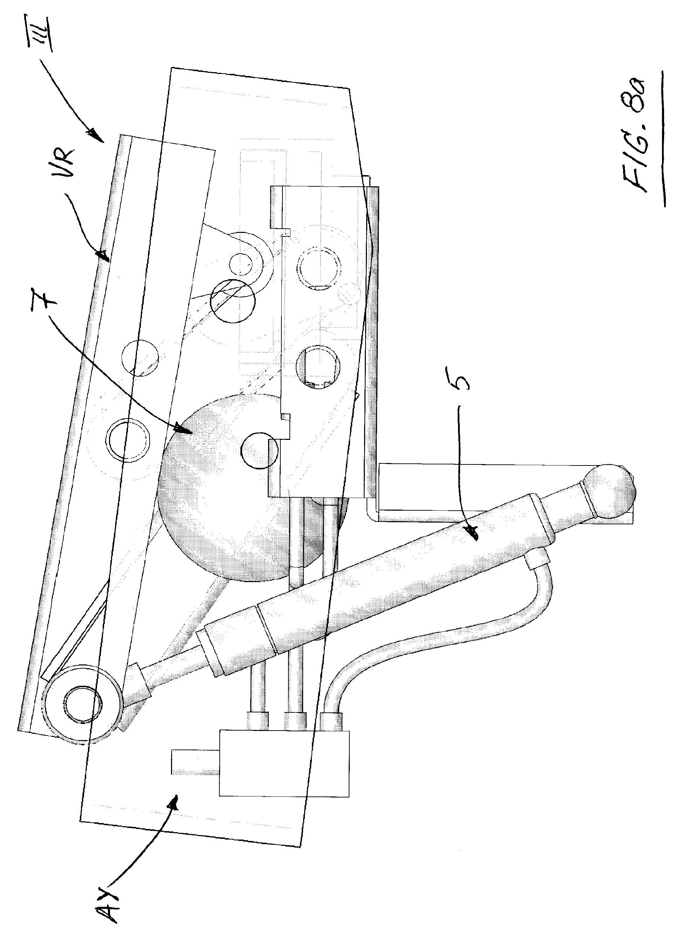

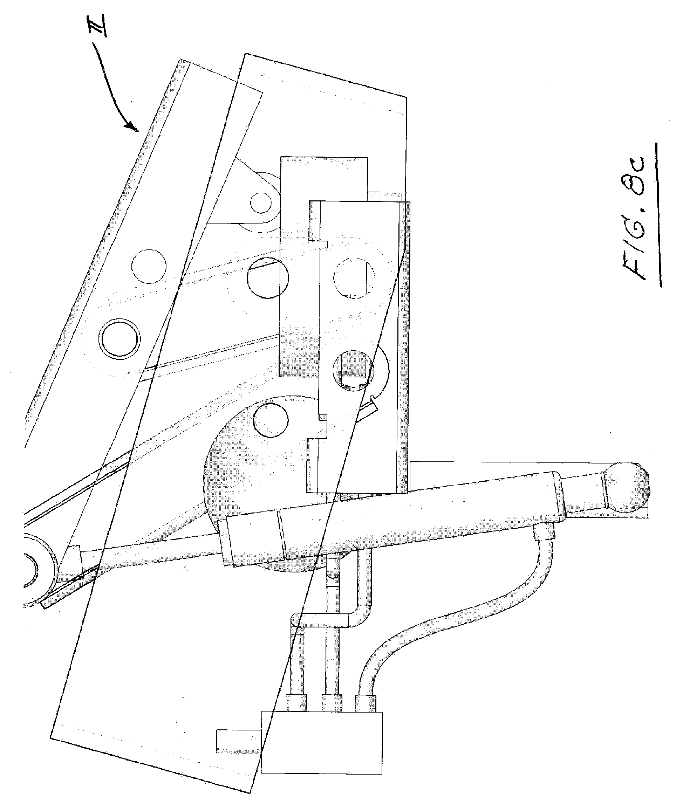

Furthermore as an advantageous embodiment of the seat assembly particularly with reference to figures 7 and 8a-8c, it comprises an auxiliary power unit AY operated by mechanical, pressure medium operated, electrical and/or corresponding operating means 5 e.g. in order to make easier a tilting and standing up -movement w' in a standing up -situation, in order to deaden downward movement of a person sitting down on the seat part 1, in order to change the position of the seat part 1 and/or for a corresponding purpose. In this case, in connection with the seat assembly there is arranged furthermore advantageously control means 6 in order to control the functioning of the auxiliary power unit AY.

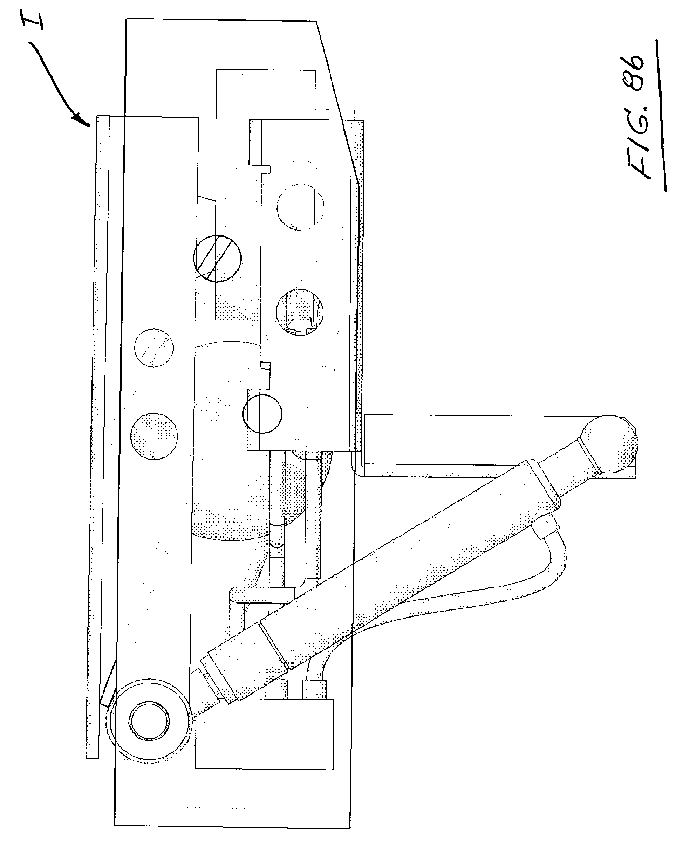

The seat assembly has advantageously furthermore an energy storage unit 7 in order to enable use of the operating means 5 in a self-powered manner. The energy storage unit 7 is arranged furthermore to be charged advantageously by load of the seat part 1 and/or the elbow rests 1a, such as by charging the energy storage unit 7, such as a gas/fluid operated spring ball e.g. when the seat part 1 in the exemplary subassembly, as shown in figures 8a-8c, gets turned from a standby - position III, being inclined downward toward its front edge, into a horizontal position according to figure 8b, when the same gets lowered vertically and/or when same operate in a corresponding manner.

In this context it is naturally possible to arrange the auxiliary power unit AY of the seat assembly instead of the embodiments described above or in addition to the same also to be operated by auxiliary power mechanically, such as operated by a person who assists a person who is standing up by using a foot pedal operated e.g. by joint and/or spring mechanisms, and/or electrically by using a battery, an accumulator and/or mains current, or hydraulically/pneumatically by exploiting e.g. pressure of a water/compressed air system etc. The embodiments listed above have not, however, been presented in greater detail in the drawings.

Furthermore as an advantageous embodiment, the control means 6 comprise controls, being provided in a built-in manner with the seat part 1, such as with an elbow rest 1a, and/or being operable on remote use principle, such as wirelessly, for the use of the operating means 5, preferably in order to produce an adjustable lifting force/movement dampening.

It is apparent that the invention is not limited to those previously shown or explained embodiments, but instead it can be modified within the basic idea of the invention in many ways depending e.g. on the sitting base being used at any given time in connection with the seat assembly. In the enclosed drawings there is not shown more closely fastening means for the connecting of the seat assembly to a wheelchair or the like sitting base, because such implementations depend on the support system of the sitting base. In this respect, it is possible to carry out the seat assembly e.g. on quick release principle e.g. in order to make the connection thereof with a wheelchair quicker. It is also evident that the seat assembly according to the invention can be used with what ever type of sitting base, when there is a need for assisting a person sitting thereon to stand up. One such use in a suitably modified manner could be e.g. a car seat, wherein the seat assembly could be advantageously equipped with a turning mechanism in order to enable turning of the sitting base e.g. with an angle of 45-90° round a vertical axel.

## Claims

1. A seat assembly, which is intended particularly for assisting a person sitting thereon to stand up from a sitting position and, which comprises a seat part (1) provided in connection with a sitting base (A) and equipped with elbow rests (1a), whereby the seat part (1) comprises a joint mechanism including tilting means and lifting means (2, 4), by means of which the seat part (1) is arranged simultaneously on the one hand to get inclined from an essentially horizontal sitting-position (I) to a standing up -position (II), where the seat part is inclined downward toward its front edge, and on the other hand to be moved upward, while being inclined to the standing up -position (II) from the sitting-position (I), whereby particularly in order to enable assisting of a standing up -movement by influence of the person him-/herself sitting on the seat part (1), by exploiting his/her upper body through using hand forces, the joint mechanism (2, 4) being arranged operable at least partly through the elbow rests (1a), wherein the joint mechanism (2, 4) is arranged on a quadrangle joint -principle in a way that it consists of one or more pairs of articulated arms (Np), the arms being articulated in connection with the seat part (1) and turning (w") in an essentially vertical plane, whereby a frontal articulated arm (Np1) is shorter than second articulated arm (Np2) in order to bring about the simultaneous tilting and lifting movement of the seat part (1), **characterized in that** the joint mechanism (2, 4) is operable by a power influence (F) directed downward from the elbow rests (1a), whereby the elbow rests (1a) are arranged in a power transmitting connection with one or more second articulated arms (Np2) of the quadrangle joint mechanism (2, 4).

2. A seat assembly according to claim 1, **characterized in that** it comprises an intermediate frame (VR) arranged below the seat part (1), in connection with which at least one or several parallel pairs of articulated arms (Np) of the quadrangle joint mechanism (2, 4) is/are articulated (N1) centrically in respect with the seat part (1).

3. A seat assembly according to claim 1 or 2, **characterized in that** it comprises a frame part (AR) in order to enable use of the seat assembly as a separate accessory by fastening it by means of fastening means (3) immovably in connection with a sitting base (A).

4. A seat assembly according to any of the preceding claims 1-3, **characterized in that** the quadrangle joint mechanism (2, 4) is arranged in an essentially built-in manner in connection with a sitting base (A), such as a car seat, a chair, a wheel chair, a sitting platform, a shower chair, a WC-seat and/or the like.

5. A seat assembly according to any of the preceding claims 1-4, **characterized in that** it comprises an auxiliary power unit (AY) operated by mechanical, pressure medium operated and/or electrical operating means (5) in order to make easier tilting and standing up -movement in a standing up situation, in order to deaden downward movement of a person sitting down on the seat part (1) and/or in order to change the position of the seat part (1).

6. A seat assembly according to claim 5, **characterized in that** in connection therewith is arranged control means (6) in order to control functioning of the auxiliary power unit (AY).

7. A seat assembly according to claim 5 or 6, **characterized in that** it comprises an energy storage unit (7) in order to enable use of the operating means (5) in a self-powered manner.

8. A seat assembly according to claim 7, **characterized in that** the energy storage unit (7) is arranged to be charged by load of the seat part (1) and/or the elbow rests (1a), such as when the said part/parts get/gets turned from a stand-by position (II), being essentially inclined downward toward its front edge, into an essentially horizontal position and/or when the same gets lowered vertically.

9. A seat assembly according to any of the preceding claims 6-8, **characterized in that** the control means (6) comprises controls, being provided in a built-in manner with the seat part (1), such as with an elbow rest (1a), and/or being operable on remote use principle, such as wirelessly, in order to drive the operating means (5) preferably in order to produce an adjustable lifting force/movement dampening.

## Patentansprüche

1. Sitzanordnung, welche insbesondere dafür vorgesehen ist, eine darauf sitzende Person zu unterstützen, aus einer Sitzposition aufzustehen, und welche ein Sitzteil (1) aufweist, welches in Verbindung mit einer Sitzbasis (A) bereitgestellt ist und mit Armlehnen (1a) versehen ist, wobei das Sitzteil (1) einen Gelenkmechanismus aufweist, der Kippmittel und Hebemittel (2, 4) umfasst, mittels welchen das Sitzteil (1) gleichzeitig dafür eingerichtet ist, einerseits aus einer im Wesentlichen horizontalen Sitzposition (I) in eine Aufstehposition (II) gekippt zu werden, wobei das Sitzteil in Richtung seines vorderen Randes nach unten gekippt wird, und andererseits nach oben bewegt zu werden, während es aus der Sitzposition (I) in die Aufstehposition (II) gekippt wird, wobei insbesondere, um zu ermöglichen, eine Aufstehbewegung durch den Einfluss der auf dem Sitzteil (1) sitzenden Person selbst zu unterstützen, indem über die Nutzung von Handkräften ihr Oberkörper genutzt wird, der Gelenkmechanismus (2, 4) so eingerichtet ist, dass er zumindest teilweise durch die Armlehnen (1a) zu bedienen ist, wobei der Gelenkmechanismus (2, 4) in einem Viereckgelenk-Prinzip so eingerichtet ist, dass er aus einem oder mehreren Gelenkarmpaaren (Np) besteht, wobei die Arme in Verbindung mit dem Sitzteil (1) angelenkt sind und sich in einer im Wesentlichen vertikalen Ebene drehen (w"), wobei ein vorderer Gelenkarm (Np1) kürzer ist als ein zweiter Gelenkarm (Np2), um die gleichzeitige Kipp- und Hebebewegung des Sitzteils (1) zu bewirken, **dadurch gekennzeichnet, dass** der Gelenkmechanismus (2, 4) durch einen Krafteinfluss (F) zu bedienen ist, der von den Armlehnen (1a) nach unten gerichtet ist, wobei die Armlehnen (1a) in einer Kraftübertragungsverbindung mit einem oder mehreren zweiten Gelenkarmen (Np2) des Viereck-Gelenkmechanismus (2, 4) angeordnet sind.

2. Sitzanordnung nach Anspruch 1, **dadurch gekennzeichnet, dass** sie einen Zwischenrahmen (VR) aufweist, der unterhalb des Sitzteils (1) angeordnet ist, wobei in Verbindung mit diesem mindestens eines oder mehrere parallele Gelenkarmpaare (Np) des Viereck-Gelenkmechanismus (2, 4) in Bezug auf das Sitzteil zentriert angelenkt ist/sind (N1).

3. Sitzanordnung nach Anspruch 1 oder 2, **dadurch gekennzeichnet, dass** sie ein Rahmenteil (AR) aufweist, um die Verwendung der Sitzanordnung als ein separates Hilfsmittel zu ermöglichen, indem sie mittels Befestigungsmitteln (3) unbeweglich in Verbindung mit einer Sitzbasis (A) befestigt wird.

4. Sitzanordnung nach einem der vorhergehenden Ansprüche 1 bis 3, **dadurch gekennzeichnet, dass** der Viereck-Gelenkmechanismus (2, 4) auf eine im Wesentlichen eingebaute Weise in Verbindung mit einer Sitzbasis (A) wie z.B. einem Fahrzeugsitz, einem Stuhl, einem Rollstuhl, einer Sitzplattform, einem Duschkabinenstuhl, einem WC-Sitz und/oder dergleichen eingerichtet ist.

5. Sitzanordnung nach einem der vorhergehenden Ansprüche 1 bis 4, **dadurch gekennzeichnet, dass** sie eine Hilfsantriebseinheit (AY) aufweist, welche durch mechanische, Druckmedium-betriebene und/oder elektrische Antriebsmittel (5) angetrieben wird, um die Kipp- und Aufstehbewegung in einer Aufstehsituation einfacher zu machen, um die Abwärtsbewegung einer Person, die sich auf das Sitzteil (1) setzt, zu dämpfen, und/oder um die Position des Sitzteils (1) zu ändern.

6. Sitzanordnung nach Anspruch 5, **dadurch gekennzeichnet, dass** in Verbindung damit ein Steuerungsmittel (6) eingerichtet ist, um die Funktion der Hilfsantriebseinheit (AY) zu steuern.

7. Sitzanordnung nach Anspruch 5 oder 6, **dadurch gekennzeichnet, dass** sie eine Energiespeichereinheit (7) aufweist, um die Verwendung des Antriebsmittels (5) in selbstangetriebener Weise zu ermöglichen.

8. Sitzanordnung nach Anspruch 7, **dadurch gekennzeichnet, dass** die Energiespeichereinheit (7) so eingerichtet ist, dass sie durch die Last des Sitzteils (1) und/oder der Armlehnen (1a) geladen wird, so dass, wenn das Teil/die Teile aus einer Aufstehposition (II), die im Wesentlichen in Richtung seines/ihres vorderen Randes nach unten gekippt ist, in eine im Wesentlichen horizontale Position gedreht wird/werden oder wenn selbiges vertikal abgesenkt wird.

9. Sitzanordnung nach einem der vorhergehenden Ansprüche 6 bis 8, **dadurch gekennzeichnet, dass** das Steuermittel (6) Steuerungen aufweist, die auf eine eingebaute Weise mit dem Sitzteil (1), z.B. mit einer Armlehne (1a), bereitgestellt sind und/oder nach dem Fernbedienungsprinzip zu bedienen sind, z.B. drahtlos, um das Antriebsmittel (5) anzusteuern, vorzugsweise um eine einstellbare Dämpfung der Hebekraft/Hebebewegung zu erzeugen.

## Revendications

1. Ensemble formant siège, particulièrement destiné à aider une personne s'y trouvant assise à se lever de sa position assise, et qui comprend une partie formant siège (1) prévue en liaison avec une base d'assise (A) et pourvue d'accoudoirs (1a), la partie formant siège (1) comprenant un mécanisme d'articulation comportant un moyen de basculement et un moyen de levage (2, 4) grâce auxquels la partie formant siège (1) est adaptée pour, simultanément, d'une part subir une inclinaison en passant d'une position d'assise sensiblement horizontale (I) à une position de verticalité (II), dans laquelle la partie formant siège est inclinée vers le bas par son bord avant, et d'autre part subir un mouvement vers le haut tout en étant inclinée vers la position de verticalité (II) en partant de la position d'assise (I), permettant particulièrement d'aider une personne assise sur la partie formant siège (1) à se mettre debout, sous sa propre influence, en exploitant la partie supérieure de son corps en exerçant une force transmise par les mains, le mécanisme d'articulation (2, 4) étant agencé pour être sollicité au moins partiellement par le biais des accoudoirs (1a), ledit mécanisme d'articulation (2, 4) étant conçu selon un principe d'articulation quadrangulaire en se composant d'une ou plusieurs paires de bras articulés (Np), les bras étant articulés en liaison avec la partie formant siège (1) et tournant (w") dans un plan essentiellement vertical, moyennant quoi un bras articulé avant (Np1) est plus court qu'un second bras articulé (Np2) afin de donner lieu au mouvement de basculement et de levage simultané de la partie formant siège (1), **caractérisé en ce que** le mécanisme d'articulation (2, 4) peut être sollicité sous l'influence d'une force (F) dirigée vers le bas depuis les accoudoirs (1a), les accoudoirs (1a) étant reliés à un ou plusieurs seconds bras articulés (Np2) du mécanisme d'articulation quadrangulaire (2, 4) selon une liaison permettant la transmission des forces.

2. Ensemble formant siège selon la revendication 1, **caractérisé en ce qu'**il comprend un cadre intermédiaire (VR) agencé sous la partie formant siège (1), en liaison avec lequel au moins une ou plusieurs paires parallèles de bras articulés (Np) du mécanisme d'articulation quadrangulaire (2, 4) sont articulées (N1) de manière centrée par rapport à la partie formant siège (1).

3. Ensemble formant siège selon la revendication 1 ou 2, **caractérisé en ce qu'**il comprend une partie de cadre (AR) permettant d'employer l'ensemble formant siège sous la forme d'un accessoire séparé, en l'immobilisant grâce à un moyen de fixation (3) en liaison avec une base d'assise (A).

4. Ensemble formant siège selon l'une quelconque des revendications précédentes 1 à 3, **caractérisé en ce que** le mécanisme d'articulation quadrangulaire (2, 4) est agencé de manière essentiellement intégrée en liaison avec une base d'assise (A), telle qu'un siège de voiture, une chaise, un fauteuil roulant, une plate-forme d'assise, un siège de douche, un siège de WC et similaires.

5. Ensemble formant siège selon l'une quelconque des revendications précédentes 1 à 4, **caractérisé en ce qu'**il comprend une unité motrice auxiliaire (AY) sollicitée par un moyen de sollicitation (5) mécanique, électrique et/ou fonctionnant grâce à un fluide sous pression, permettant de faciliter un mouvement de basculement et de verticalité dans une situation de passage à la position debout, afin d'atténuer le mouvement vers le bas opéré par une personne s'asseyant sur la partie formant siège (1) et/ou afin de modifier la position de la partie formant siège (1).

6. Ensemble formant siège selon la revendication 5, **caractérisé en ce qu'**un moyen de commande (6) relié à celui-ci est conçu pour commander le fonctionnement de l'unité motrice auxiliaire (AY).

7. Ensemble formant siège selon la revendication 5 ou 6, **caractérisé en ce qu'**il comprend une unité de stockage d'énergie (7) permettant d'utiliser le moyen de sollicitation (5) de manière autonome.

8. Ensemble formant siège selon la revendication 7, **caractérisé en ce que** l'unité de stockage d'énergie (7) est conçue pour être chargée sous l'effet de la charge exercée sur la partie formant siège (1) et/ou sur les accoudoirs (1a), par exemple lorsque la ou lesdites parties passent d'une position d'attente (II), présentant une inclinaison essentiellement dirigée vers le bas par le bord avant, à une position essentiellement horizontale, et/ou lors d'un abaissement à la verticale.

9. Ensemble formant siège selon l'une quelconque des revendications précédentes 6 à 8, **caractérisé en ce que** le moyen de commande (6) comprend des commandes, prévues de manière intégrée à la partie formant siège (1), par exemple avec un accoudoir (1a), et/ou actionnables à distance, par exemple sans fil, pour exercer une action sur le moyen de sollicitation (5), de préférence afin de produire un amortissement réglable de la force ou du mouvement de levage.
